**Europäisches Patentamt**

(19) **European Patent Office**

**Office européen des brevets**

(11) Veröffentlichungsnummer: **0 077 450**
**B1**

(12) **EUROPÄISCHE PATENTSCHRIFT**

(45) Veröffentlichungstag der Patentschrift:
10.08.88

(51) Int. Cl.⁴: **G 06 F 11/16**

(21) Anmeldenummer: **82107720.3**

(22) Anmeldetag: **23.08.82**

(54) Sicherheits-Ausgabeschaltung für eine Binärsignalpaare abgebende Datenverarbeitungsanlage.

(30) Priorität: **21.09.81 DE 3137450**

(43) Veröffentlichungstag der Anmeldung:
**27.04.83 Patentblatt 83/17**

(45) Bekanntmachung des Hinweises auf die Patenterteilung:
**10.08.88 Patentblatt 88/32**

(84) Benannte Vertragsstaaten:
**AT CH FR GB LI**

(56) Entgegenhaltungen:
**DE-B-2 651 314**
**DE-B-2 932 270**

**ELEKTRONISCHE RECHENANLAGEN, Band 22, Nr. 5, Oktober 1980, Seiten 229-233,236, München, DE; H.-J. LOHMANN: "Sicherheit von Mikrocomputern für die Eisenbahnsignaltechnik"**

(73) Patentinhaber: **Siemens Aktiengesellschaft Berlin und München, Wittelsbacherplatz 2, D-8000 München 2 (DE)**

(72) Erfinder: **Eue, Wolfgang, Ing.(grad.), Hagenring 22, D-3300 Braunschweig (DE)**
Erfinder: **Strelow, Horst, Dipl.- Ing., Dörenstrasse 9, D-3302 Cremlingen 1 (DE)**

EP 0 077 450 B1

## Beschreibung

Die Erfindung bezieht sich auf eine Sicherheits-Ausgabeschaltung für eine Datenverarbeitungsanlage mit mindestens einem Binärsignalpaare abgebenden Schaltwerk und einer Taktversorgung hierfür, wobei zur Übernahme der Binärsignalpaare jeweils zwei speichernde Schaltglieder vorgesehen sind, deren Ausgangssignale mittelbar über zwei weitere Schaltglieder zur Ausgabe bereitstehen und jeweils zusätzlich einer durch Testimpulse der Taktversorgung abfragbaren Vergleichsschaltung zugeführt sind, welche die Testimpulse nur bei ordnungsgerechtem Vergleichsergebnis zur weiteren Aufrechterhaltung der Taktversorgung an diese zurückgibt.

Zur Steuerung automatisierter Abläufe werden auf vielen technischen Gebieten in zunehmendem Maße elektronische Schaltwerke eingesetzt. Hierzu gehören insbesondere solche Einrichtungen, die mittlerweile handelsüblich geworden sind, z. B. Mikrocomputer. Diese Einrichtungen und auch beliebige Prozeßrechner sind nicht ohne weiteres auf dem Gebiet der Eisenbahnsicherungstechnik und bei kerntechnischen Anlagen einsetzbar, weil bei diesen Anlagen besondere Anforderungen an die Sicherheit der Datenverarbeitung gestellt werden müssen. Schließlich hängen vom ordnungsgerechten Arbeiten dieser Anlagen Menschenleben ab. Anlagen der genannten Art werden in der Regel so aufgebaut, daß sich Bauteilefehler dahingehend auswirken, daß niemals eine Betriebsgefährdung eintritt, höchstens eine Betriebshemmung. Dies bedeutet für die Eisenbahnsicherungstechnik, daß stets auf ein geringeres Energieniveau umgeschaltet wird, so daß beispielsweise die Fahrgeschwindigkeit eines Zuges vermindert oder eine Ausfahrt unterbunden wird. Auf diese Art ist es möglich, bei einer beliebigen Störung der steuernden Einrichtungen diese in einen Zustand zu überführen, der für den Menschen und auch die Maschienen ungefährlich ist.

Um nun rechtzeitig eine Störung innerhalb eines Schaltwerkes erkennen zu können, können Doppel- oder auch Dreifachsysteme angewandt werden. Bei Doppelsystemen mit Sicherheits-Ausgaschaltungen der eingangs genannten Gattung werden die Steuerungen so aufgebaut, daß bei einer Abweichung innerhalb eines der beiden Kanäle die zugehörige Taktversorgung unmittelbar abgeschaltet wird, so daß keine gefahrbringenden Signale ausgegeben werden.

Derartige Doppelsysteme können aus einem Mikrocomputer bestehen, der mit diversitären Programmen schließlich eine zweikanalige Ausgabe ermöglicht. Die zweikanalige Datenverarbeitungsanlage kann aber auch aus zwei dieselben Informationen verarbeitenden Mikrocomputern bestehen.

Eine derartige Datenverarbeitungsanlage ist in der Fachzeitschrift "Elektronische Rechenanlagen", Heft 5, 1980, Seiten 229-236 beschrieben. Bei dieser bekannten digitalen Datenverarbeitungsanordnung arbeiten in zwei voneinander unabhängigen Kanälen zwei Mikrocomputer, von deren Mikroprozessoren gleichwertige Anschlußstifte für Adressen, Daten und auszugebende Steuersignale paarweise mit je einem Vergleicher verbunden sind. Eine für beide Mikrocomputer gemeinsam vorgesehene Taktversorgung gibt außer den für die Datenverarbeitung erforderlichen Impulsen Testsignale aus, welche alle in Reihe geschalteten Vergleicher durchlaufen und bei ordnungsgerechtem Vergleichsergebnis zum Auslösen von weiteren Impulsen an die Taktversorgung zurückgeführt werden. Bei dem in der Fachzeitschrift erläuterten Sicherungsprinzip des SIMIS-Mikrocomputersystems wird zusätzlich davon Gebrauch gemacht, mit Hilfe eines gesonderten Abschalters die Versorgungsspannung von Ausgangssignalumsetzern dann abzuschalten, wenn die Testimpulse bei fehlerhaftem Vergleichsergebnis an die Taktversorgung nicht mehr zurückgegeben werden.

Im Fehlerfall wird nicht nur die gemeinsame Taktversorgung abgeschaltet und damit die für die Datenverarbeitung erforderlichen Steuertakte, sondern zusätzlich auch noch zwei Gleichspannungsquellen, die zur Stromversorgung der Mikrocomputer dienen. Die letztere Maßnahme hat jedoch den Nachteil, daß das Wiederaufrüsten der zweikanaligen Datenverarbeitungsanordnung nach dem Beheben der den Abschaltvorgang verursachenden Störung besonders aufwendig sein kann, da auf Grund der fehlenden Gleichstromversorgung sich inzwischen eine Vielzahl undefinierter Schaltzustände eingestellt haben kann.

Eine Sicherheits-Ausgabeschaltung für eine Binärsignale abgebende Datenverarbeitungsanlage der eingangs genannten Gattung ist in der DE-AS 26 51 314 beschrieben. Sie eignet sich in besonderem Maße für Steuerungen mit Sicherheitsverantwortung, z. B. in der nuklearen Medizin, derart, daß bei einem Defekt eine Bestrahlung unterbrochen wird. Für PKW-Steuerungen kann eine sichere, radargesteuerte Abstandswarnanlage oder eine sichere Steuerung für ein schlupffreies Bremsen aufgebaut werden. Die bekannte Sicherheits-Ausgabeschaltung kann auch bei Verkehrsampelsteuerungen, chemischen Großprozessen, Walzenstraßensteuerungen, Kraftwerkssteuerungen und bei kerntechnischen Prozessen eingesetzt werden. Die speichernden und verknüpfenden Schaltglieder brauchen bei der bekannten Sicherheits-Ausgabeschaltung nicht nach dem Fail-Safe-Prinzip aufgebaut zu sein; es reichen also normale, handelsübliche Schaltglieder. Bei umfangreichen Schaltwerken mit einer Vielzahl von Ausgangskanalpaaren erfordern die für die Ausgabe erforderlichen Schaltglieder allerdings relativ viel Platz, da sämtliche Ein- und Ausgänge pro Schaltelement getrennt zugänglich sein müssen (Kanaltrennung).

Der Erfindung liegt daher die Aufgabe zugrunde, eine Sicherheits-Ausgabeschaltung der eingangs genannten Art dahingehend weiterzubilden, daß besonders bei einer Vielzahl von Ausgangssignalpaaren die Anzahl von Bausteinen mit integrierten Schaltgliedern und damit der Platzbedarf geringer wird.

Erfindungsgemäß wird die Aufgabe dadurch gelöst, daß an jedes speichernde Schaltglied ausgangsseitig eine Torschaltung angeschlossen ist, die in Abhängigkeit des Schaltzustandes des zugeordneten speichernden Schaltgliedes dynamische Signale der Taktversorgung an die als Äquivalenzüberwachungsglied ausgebildete Vergleichsschaltung abgibt. Eine vorteilhafte Weiterbildung der Erfindung ist dadurch gegeben, daß als Torschaltung ein UND-Glied mit einem Offen-Kollektor-Ausgang verwendet wird, der über einen Arbeitswiderstand mit einer Spannungsquelle verbunden ist, die durch die an die Taktversorgung rückgeführten Testimpulse gesteuert wird. Diese Ausführungsform der Erfindung kommt dem Wunsche nach einem gedrängten Aufbau in besonderem Maße nach, da UND-Glieder in hoher Anzahl als integrierte Schaltkreise in einem Chip vereinigt sind. Dabei sind alle Ein- und Ausgänge getrennt voneinander zugänglich.

In bevorzugter Weise kann als Torschaltung auch eine Drei-Zustands-Treiberstufe verwendet werden, deren Dateneingang mit einem Ausgang des zugeordneten speichernden Schaltgliedes und deren Freigabeeingang mit der Taktversorgung verbunden sind und deren Ausgang über einen Arbeitswiderstand mit einer Spannungsquelle verbunden ist, die durch die an die Taktversorgung rückgeführten Testimpulse gesteuert wird.

Bei einer anderen vorteilhaften Ausführungsform der Erfindung kann die Drei-Zustands-Treiberstufe in etwas anderer Schaltung dahingehend eingesetzt werden, daß deren Freigabeeingang mit dem speichernden Schaltglied und deren Dateneingang mit der Taktversorgung verbunden sind, wobei die Stromversorgung der Drei-Zustands-Treiberstufe aus einer Spannungsquelle erfolgt, die durch die an die Taktversorgung rückgeführten Testimpulse gesteuert wird.

Besonders vorteilhaft ist für die drei oben angegebenen Ausführungsformen, daß ein mit minimalem Platzbedarf integriertes weiteres Sicherungselement vorgesehen ist, das auf Stromversorgung der Datenverarbeitungsanlage keinen Einfluß hat.

Wenn es erwünscht ist, die Binärsignale auf ein höheres Energieniveau zu steigern, kann in vorteilhafter Weise die Ausgabe der Binärsignale mittelbar über einen nur in einem der beiden Kanäle jedes Kanalpaares vorgesehenen, durch die jeweilige Torschaltung gesteuerten Fail-Safe-Verstärker erfolgen.

Eine besonders vorteilhafte Ausführungsform der Erfindung sieht vor, daß an die Torschaltungen beider Kanäle eines Kanalpaares je ein Verstärker angeschlossen ist, der ein Relais steuert, wobei Kontakte beider Relais jedes Kanalpaares eine Äquivalenzschaltung bilden, deren Ausgang mit der Datenverarbeitungsanlage verbunden ist, wobei ferner weitere Kontakte beider Relais den Ausgang der Schaltung bilden.

Vorteilhaft ist bei dieser Ausführungsform, daß keine Fail-Safe-Verstärker benötigt werden. Bei allen Ausführungsformen der Erfindung unter Verwendung von zusätzlichen Verstärkern ist es für die Sicherheit besonders günstig, daß die Verstärker durch die von den Testimpulsen abhängige Spannungsquelle mit Energie versorgt werden.

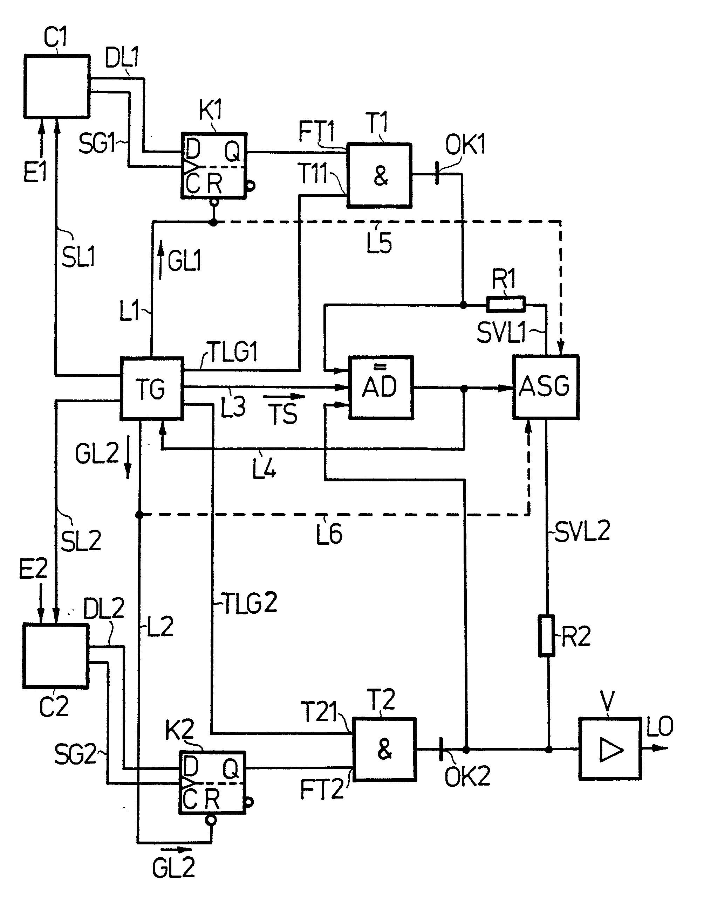

Ein Ausführungsbeispiel der Erfindung ist in der Zeichnung im wesentlichen als Blockschaltbild dargestellt und wird nachstehend näher erläutert.

Eine zweikanalige Datenverarbeitungsanlage besteht aus zwei Mikrocomputern C1 und C2, denen eine gemeinsame Taktversorgung TG zugeordnet ist. Aus Sicherheitsgründen verarbeiten die beiden Mikrocomputer C1 und C2 dieselben Informationen taktsynchron. Die in den beiden Mikrocomputern C1 und C2 zu verarbeitenden Informationen werden über Eingangsleitungen E1 und E2 zugeführt. In der Praxis ist eine Vielzahl dieser Eingangsleitungen erforderlich. Entsprechendes gilt sinngemäß für die Leitungen SL1 und SL2, über welche die beiden Mikrocomputer C1 und C2 mit den für den Betrieb erforderlichen Taktimpulsen versorgt werden. Beim vorliegenden Ausführungsbeispiel sollen die Binärsignale von den Torschaltungen nicht unmittelbar, sondern mittelbar über einen Fail-Safe-Verstärker V ausgegeben werden. Wesentlich ist dabei für die Sicherheits-Ausgabeschaltung, den Fail-Safe-Verstärker V mit fehlersicheren Signalen anzusteuern, damit auf jeden Fall gewährleistet ist, daß niemals ungewollt prozeßaktivierende Signale über die Leitung L0 ausgegeben werden.

Um die Zeichnung nicht mit unnötigen Leitungen zu belasten, ist in jeden der beiden Mikrocomputer C1 bzw. C2 nur eine Ausgangsleitung DL1 bzw. DL2 angeschlossen; diese beiden Leitungen bilden ein Kanalpaar. Über dieses werden bei ordnungsgerechtem Betrieb übereinstimmende Binärsignale entweder mit dem logischen Wert "0" oder mit dem logischen Wert "1" ausgegeben. Zur Übernahme von Binärsignalpaaren aus dem Kanalpaar DL1/DL2 sind zwei bistabile Kippglieder K1, K2 vorgesehen. Beim Ausführungsbeispiel handelt es sich um D-Kippglieder. Es können auch Kippglieder von Schieberegistern sein. Der D-Eingang des Kippgliedes K1 ist mit der Ausgangsleitung DL1 verbunden. Der D-Eingang des Kippgliedes K2 ist an die Ausgangsleitung DL2 angeschlossen. Der Takteingang C des Kippgliedes K1 bzw. K2 ist über eine Steuersignalleitung SG1 bzw. SG2 ebenfalls mit dem Mikrocomputer C1 bzw. C2 verbunden. Somit kann die Übernahme von Binärsignalpaaren aus den Mikrocomputern C1 und C2 über die Ausgangsleitungen DL1 und DL2 taktflankengesteuert erfolgen. Nebenbei sei bemerkt, daß die Ausgangsleitungen DL1 und DL2 bzw. die Steuersignalleitungen SG1 und SG2 in Verbindung stehen mit den jeweiligen Busleitungen des zugehörigen Mikrocomputers C1 bzw. C2.

Ein Rücksetzeingang R des Kippgliedes K1 bzw. K2 ist über eine Leitung L1 bzw. L2 mit der Taktversorgung TG verbunden. Hierdurch können zu gegebener Zeit Grundstellungssignale GL1 bzw. GL2 mit dem logischen Wert "0" zum Rücksetzen der Kippglieder K1 und K2 zugeführt werden. Dies ist beispielsweise erforderlich zum Einstellen einer Anfangsstellung der Sicherheits-Ausgabeschaltung. An den Ausgang Q des Kippgliedes K1 bzw. K2 ist der Freigabeeingang FT1 bzw. FT2 einer Torschaltung T1 bzw. T2 angeschlossen. Der jeweils zweite Eingang T11 bzw. T21 der Torschaltungen T1 und T2 ist über eine Taktsignale führende Leitung TLG1 bzw. TLG2 mit der Taktversorgung TG verbunden. Bei einer anderen Ausführungsform können über die Leitungen TLG1, 2 auch andere Signale gegeben werden, die geeignet sind, die Torschaltungen für Impulsfolgen der Kippglieder durchlässig zu schalten. Als Torschaltung T1 bzw. T2 wird in bevorzugter Weise ein UND-Glied mit einem Offen-Kollektor-Ausgang verwendet, der über einen Arbeitswiderstand R1 bzw. R2 und die Leitung SVL1 bzw. SVL2 mit einer von den Testimpulsen TS abhängigen Spannungsquelle ASG verbunden ist. Der senkrechte Balken OK1 bzw. OK2 am Ausgang der Torschaltung T1 bzw. T2 soll darauf hindeuten, daß es sich bei der Torschaltung um ein UND-Glied handelt, das einen Offen-Kollektor-Ausgang aufweist. Bei rückgesetztem Kippglied K1 bzw. K2 ist die jeweils nachgeschaltete Torschaltung T1 bzw. T2 gesperrt, so daß die über den Eingang T11 bzw. T21 zugeführten Taktsignale nicht durchgeschaltet werden. Dabei führen die Ausgänge beider Torschaltungen T1 und T2 ein konstantes Dauersignal, das bei dieser Sicherheits-Ausgabeschaltung als prozeßhemmendes Signal zu werten ist.

Als Vergleichsschaltung für die über die Torschaltungen T1 und T2 ausgegebenen Binärsignale dient ein Äquivalenzüberwachungs glied AD, das außer mit den Ausgängen der beiden Torschaltungen T1 und T2 über eine Leitung L3 mit der Taktversorgung TG verbunden ist. Über die Leitung L3 gibt die Taktversorgung TG Testimpulse TS aus, die beim Vorhandensein eines gleichwertigen und damit ordnungsgerechten Binärsignalpaares an den Ausgängen der beiden Torschaltungen T1 und T2 vom Äquivalenzüberwachungsglied AD wieder ausgegeben werden. Es erfolgt eine Rückführung der Testimpulse TS über die Leitung L4 zur Taktversorgung TG. Die rückgeführten Testimpulse TS dienen zur weiteren Aufrechterhaltung der Taktversorgung bis zur Ausgabe eines nächsten Testimpulses TS. Ein derartiger Aufbau der Schaltung hat zur Folge, daß die Taktversorgung TG bei einer Äquivalenzstörung sofort abgeschaltet wird, so daß die beiden Mikrocomputer C1 und C2 nicht mehr arbeitsfähig sind. Dies hat wiederum zur Folge, daß keine gefahrbringenden Signale über das Kanalpaar DL1, DL2 zur Verfügung gestellt werden. Ohne Taktsignale über die Leitungen TLG1 bzw. TLG2 können die Torschaltungen T1 und T2 keine empfangsseitig als prozeßaktivierend zu wertende Signale abgeben. In diesem Zusammenhang sei kurz erwähnt, daß der Verstärker V neben seiner Fail-Safe-Eigenschaft, also Ausführung als Wechselspannungsverstärker mit galvanischer Trennung des Ausgangskreises vom Eingangskreis, die Eigenschaft hat, ein selektiver Empfänger für die Ausgangssignale der Torschaltung T2 zu sein. Für dieses Ausführungsbeispiel heißt das, daß der Verstärker V nur beim Vorhandensein eines bipolaren Mindeststroms vorgegebener Frequenz bei einem Mindestspannungshub anspricht und dabei prozeßaktivierende Signale über die Leitung L0 liefert.

Die vom Äquivalenzüberwachungsglied AD durchgelassenen Testimpulse TS steuern außerdem die Spannungsquelle ASG, die als nicht selbstschwingende Wandlerschaltung konzipiert ist oder in einfachster Weise aus einem nachtriggerbaren monostabilen Kippglied bestehen kann. Die Verwendung einer derartigen Spannungsquelle ASG bringt es mit sich, daß bei fehlenden Testsignalen TS am Ausgang des Äquivalenzüberwachungsgliedes AD über die Leitungen SVL1 und SVL2 keine Energie mehr abgegeben wird. Dies wiederum hat zur Folge, daß im Defektfall der für den Verstärker V nötige positive Eingangsstrom zur Ausgabe von aktiven Signalen über die Leitung L0 nicht erreicht wird.

Aus Sicherheitsgründen kann die nur bei ordnungsgerechtem Betrieb Energie abgebende Spannungsquelle ASG auch noch zur Versorgung weiterer Schaltglieder, z. B. des Verstärkers V, verwendet werden.

Je nach Ausführung der Spannungsquelle ASG kann es zum Herbeiführen einer vorgegebenen Grundstellung von Vorteil sein, mindestens eines der Grundstellungssignale GL1, GL2 über eine entsprechende Leitung L5 und/oder L6 zuzuführen (strichliert dargestellt).

In der praktischen Ausführung sind an die Mikrocomputer C1 und C2 mehrere Kanalpaare angeschlossen. Dies erfordert in der Praxis auch dementsprechend viele Äquivalenzüberwachungsglieder AD, die hinsichtlich ihrer Ein- und Ausgänge dann zur jeweiligen Übernahme von Testimpulsen in Reihe geschaltet werden. Somit bilden die erforderlichen Äquivalenzüberwachungsglieder eine Reihenschaltung, wobei das an letzter Stelle vorgesehene Äquivalenzüberwachungsglied schließlich mit seinem Ausgang mit der Taktversorgung TG und mit der Spannungsquelle ASG verbunden ist.

Nachfolgend wird in kurzer Form eine Gesamtübersicht der Wirkungsweise der Sicherheits-Ausgabeschaltung dargelegt. Bei den Grundstellungssignale GL1 und GL2 jeweils vom Wert logisch "0" über die Leitungen L1 und L2 werden die Kippglieder K1 und K2 in eine übereinstimmende Anfangsschaltlage rückgesetzt, die für das Anlaufen der Sicherheits-Ausgabeschaltung von Bedeutung ist. In dieser genannten Anfangsschaltlage sperren die beiden Kippglieder K1 und K2 über den jeweiligen Q-Ausgang die nachgeschalteten Torschaltungen T1 und T2. In dem Zustand führen deren Ausgänge konstante Signale vom Wert logisch "0", unabhängig von der Spannungsquelle ASG. Dabei erhält das Äquivalenzüberwachungsglied AD äquivalente Signale und ist daher für einen zugeführten Testimpuls TS durchlässig. Der Verstärker V erhält bis dahin keine dynamischen Steuersignale, so daß über die Leitung L0 keine prozeßaktivierende Signale abgegeben werden können.

Nach dem Rücklaufen des dem Äquivalenzüberwachungsglied AD von der Taktversorgung TG zugeführten ersten Testimpulses TS über die Leitung L4 ist die Einschaltphase der Gesamtschaltung mit dem Aufhören der Grundstellungssignale GL1 und GL2 beendet. Vorher baut die von den Testimpulsen abhängige Spannungsquelle ASG ihre Ausgangsspannungen für die Leitungen SVL1 und SVL2 auf, da während der Grundstellungssignale GL1 und GL2 der von dem Äquivalenzüberwachungsglied AD durchgelassene Testimpuls TS vorlag. Nach dieser Einschaltphase wird durch die Spannungsquelle ASG nur solange Energie abgegeben, wie regelmäßig vom Äquivalenzüberwachungsglied AD durchgelassene Testimpulse empfangen werden. Beim Betrieb der Spannungsquelle ASG liegt am Ausgang der Torschaltungen T1 und T2 im gesperrten Zustand entsprechend der UND-Funktion weiterhin konstantes Signal vom Wert logisch "0".

Werden nun von den Mikrocomputern C1 und C2 über deren Ausgangsleitungen DL1 und DL2 Signale vom Wert logisch "0" ausgegeben, ändert sich am Schaltzustand der Kippglieder K1 und K2 sowie am Schaltzustand der beiden Torschaltungen T1 und T2 nichts. Die Ausgänge der Torschaltungen T1 und T2 liegen auch weiterhin auf niedrigem Potential.

Führen dagegen die Ausgangsleitungen DL1 und DL2 Binärsignale vom Wert logisch "1", so werden diese Werte von den jeweils zugeordneten Kippgliedern K1 und K2 übernommen, die dabei in die andere Schaltlage wechseln. Dann gibt der jeweilige Q-Ausgang der Kippglieder K1 und K2 den Wert logisch "1" aus, und die nachgeordneten Torschaltungen T1 und T2 sind für die Taktsignale auf den Leitungen TLG1 und TLG2 durchlässig. Dies hat zur Folge, daß die Ausgangssignale der beiden Torschaltungen T1 und T2 dem Rhythmus der zugeführten Taktsignale folgen. Der dem Rhythmus der Taktsignale angepaßte Verstärker V reagiert und gibt über die Leitung L0 prozeßaktivierende Signale ab.

Werden zu einem beliebigen Zeitpunkt von den Mikrocomputern C1 und C2 über deren Ausgangsleitungen DL1 und DL2 wieder Signale vom Wert logisch "0" ausgegeben, geht die Sicherheits-Ausgabeschaltung wieder in den anfangs beschriebenen Grundstellungszustand, bei welchem am Eingang des Verstärkers V wieder konstantes niedriges Potential ansteht, wobei die Leitung L0 wieder prozeßhemmende Signale führt.

Sollte im Betrieb nun einer von den beiden Mikrocomputern C1 und C2 fehlerhaft arbeiten und dadurch die Schaltlage des zugeordneten Kippgliedes K1 bzw. K2 in unzulässiger Weise ändern, so werden auch die beiden Torschaltungen T1 und T2 unterschiedlich angesteuert. Dabei wäre also eine der Torschaltungen T1 bzw. T2 geöffnet, während die zweite gesperrt ist. Aufgrund der zu dem Zeitpunkt dann vorliegenden elektrischen Unsymmetrie wird der folgende dem Äquivalenzüberwachungsglied AD zugeführte Testimpuls nicht mehr weitergeleitet. Die Taktversorgung TG reagiert auf den dann nicht mehr zurückgeführten Testimpuls mit den Unterbrechung sämtlicher Taktsignale. Auch schaltet die von den Testsignalen abhängige Spannungsquelle ASG ab. Da dem Verstärker V dann nur noch tiefes Gleichpotential zugeführt wird, werden über die Leitung L0 keinerlei prozeßaktivierende Signale mehr ausgegeben.

Da die Taktversorgung TG den Zeitpunkt der Prüfung der Äquivalenz durch die zeitliche Lage der Testimpulse TS zu den übrigen Taktsignalen festlegt, ist auch ein taktversetztes Arbeiten der beiden Mikrocomputer C1 und C2 möglich. Eine derartige Arbeitsweise der Mikrocomputer C1 und C2 ist insofern von Vorteil, als von außen dringende Störungen sich so unterschiedlich auswirken, daß es zu einer Äquivalenzstörung und damit zum Abschalten der Sicherheits-Ausgabeschaltung kommt. Das taktversetzte Arbeiten liegt in besonderer Form vor, wenn mit nur einem Mikrocomputer gearbeitet wird, der nacheinander die Kippglieder K1 und K2 steuert.

Die Mikrocomputer C1 und C2 können unterschiedlich aufgebaut sein, und zwar ist eine Hard-Ware- und/oder Soft-Ware-Diversität möglich. Die Taktversorgung wird dementsprechend ausgelegt.

Bei einer abgewandelten Ausführungsform der Sicherheit-Ausgabeschaltung ist es möglich, die Taktversorgung TG so auszubilden, daß erst beim Ausbleiben von mehreren Testimpulsen eine Gesamtabschaltung erfolgt. Eine derartige Abschaltverzögerung kann in vorteilhafter Weise auch auf die von den Testimpulsen abhängige Spannungsquelle ASG ausgedehnt werden.

**Patentansprüche**

1. Sicherheits-Ausgabeschaltung für eine Datenverarbeitungsanlage mit mindestens einem Binärsignalpaare abgebenden Schaltwerk (C1, C2) und einer Taktversorgung (TG) hierfür, wobei zur Übernahme der Binärsignalpaare jeweils zwei speichernde Schaltglieder (K1, K2) vorgesehen sind, deren Ausgangssignale mittelbar über zwei weitere Schaltglieder zur Ausgabe bereitstehen und jeweils zusätzlich einer durch Testimpulse der Taktversorgung abfragbaren Vergleichsschaltung zugeführt sind, welche die Testimpulse nur bei ordnungsgerechtem Vergleichsergebnis zur weiteren Aufrechterhaltung der Taktversorgung an diese zurückgibt, dadurch gekennzeichnet, daß an jedes speichernde Schaltglied (K1, K2) ausgangsseitig eine Torschaltung (T1, T2) angeschlossen ist, die in Abhängigkeit vom Schaltzustand des zugeordneten speichernden Schaltgliedes dynamische Signale der Taktversorgung (TG) an die als Äquivalenzüberwachungsglied (AD) ausgebildete Vergleichsschaltung abgibt.

2. Sicherheits-Ausgabeschaltung nach Anspruch 1, dadurch gekennzeichnet, daß als Torschaltung ein UND-Glied (T1, T2) mit einem Offen-Kollektor-Ausgang verwendet ist, der über einen Arbeitswiderstand (R1, R2) mit einer Spannungsquelle (ASG) verbunden ist, die durch die an die Taktversorgung (TG) rückgeführten Testimpulse (TS) gesteuert wird.

3. Sicherheits-Ausgabeschaltung nach Anspruch 1, dadurch gekennzeichnet, daß als Torschaltung (T1 bzw. T2) eine Drei-Zustands-Treiberstufe verwendet ist, deren Dateneingang mit einem Ausgang des zugeordneten speichernden Schaltgliedes (K1 bzw. K2) und deren Freigabeeingang mit der Taktversorgung (TG) verbunden sind und deren Ausgang über einen Arbeitswiderstand (R1 bzw. R2) mit einer Spannungsquelle (ASG) verbunden ist, die durch die an die Taktversorgung (TG) rückgeführten Testimpulse (TS) gesteuert wird.

4. Sicherheits-Ausgabeschaltung nach Anspruch 1, dadurch gekennzeichnet, daß als Torschaltung (T1 bzw. T2) eine Drei-Zustands-Treiberstufe verwendet ist, deren Freigabeeingang mit dem speichernden Schaltglied (K1 bzw. K2) und deren Dateneingang mit der Taktversorgung (TG) verbunden sind, wobei die Stromversorgung der Drei-Zustands-Treiberstufe aus einer Spannungsquelle (ASG) erfolgt, die durch die an die Taktversorgung (TG) rückgeführten Testimpulse (TS) gesteuert wird.

5. Sicherheits-Ausgabeschaltung nach mindestens einem der vorangehenden Ansprüche, dadurch gekennzeichnet, daß die Ausgabe von Binärsignalen über einen nur in einem der beiden Kanäle jedes Kanalpaares vorgesehenen, durch die jeweilige Torschaltung (T2) gesteuerten Fail-Safe-Verstärker (V) erfolgt.

6. Sicherheits-Ausgabeschaltung nach mindestens einem der Ansprüche 1 bis 4, dadurch gekennzeichnet, daß an die Torschaltungen beider Kanäle eines Kanalpaares je ein Verstärker angeschlossen ist, der ein Relais steuert, wobei Kontakte beider Relais jedes Kanalpaares eine Äquivalenzschaltung bilden, deren Ausgang mit der Datenverarbeitungsanlage verbunden ist, wobei ferner weitere Kontakte beider Relais den Ausgang der Schaltung bilden.

7. Sicherheits-Ausgabeschaltung nach mindestens einem der vorangehenden Ansprüche, dadurch gekennzeichnet, daß die Verstärker durch die von den Testimpulsen abhängige Spannungsquelle (ASG) mit Energie versorgt werden.

8. Sicherheits-Ausgabeschaltung nach mindestens einem der Ansprüche 1 bis 7, dadurch gekennzeichnet, daß für mindestens eine von den Testimpulsen abhängige Baugruppe (TG, ASG) eine Abschaltverzögerung vorgesehen ist.

**Claims**

1. A safety output circuit for a data processing system comprising at least one switching circuit (C1, C2) which emit pairs of binary signals and an associated clock supply (TG) where, for the transfer of the pairs of binary signals, two storing switching elements (K1, K2) are provided whose output signals are available for output indirectly via two further switching elements and are each additionally supplied to a comparator circuit which can be interrogated by test pulses of the clock supply and which, only in the event of a correct comparison result, returns the test pulses to the clock supply for the continued maintainence thereof, characterised in that each storing switching element (K1, K2) is connected at its output to a gate circuit (T1, T2) which, in dependence upon the switching state of the assigned storing switching element, emits dynamic signals of the clock supply (TG) to the comparator circuit which comprises an equivalence monitoring element (AD).

2. A safety output circuit as claimed in claim 1, characterised in that the gate circuit comprises an AND-gate (T1, T2) with an open-collector output which is connected via a load resistor (R1, R2) to a voltage source (ASG) which is controlled by the test pulses (TS) returned to the clock supply (TG).

3. A safety output circuit as claimed in claim 1, characterised in that the gate circuit (T1, T2)

comprises a three-state driver stage whose data input is connected to an output of the assigned storing switching element (K1, K2) and whose release input is connected to the clock supply (TG) and whose output is connected via a load resistor (R1, R2) to a voltage source (ASG) which is controlled by the test pulses (TS) returned to the clock supply (TG).

4. A safety output circuit as claimed in claim 1, characterised in that the gate circuit (T1, T2) comprises a three-state driver stage whose release input is connected to the storing switching element (K1, K2) and whose data input is connected to the clock supply (TG), where the current supply for the three-state driver stage is provided by a voltage source (ASG) which is controlled by the test pulses (TS) which are returned to the clock supply (TG).

5. A safety output circuit as claimed in at least one of the preceding claims, characterised in that the output of binary signals takes place via a fail-safe amplifer (V) which is provided only in one of the two channels of each channel pair and which is controlled by the respective gate circuit (T2).

6. A safety output circuit as claimed in at least one of the claims 1 to 4, characterised in that the gate circuits of the two channels of a channel pair are each connected to an amplifier which controls a relay, where contacts of the two relays of each channel pair form an equivalence circuit whose output is connected to the data processing system, where further contacts of the two relays form the output of the circuit.

7. A safety output circuit as claimed in at least one of the preceding claims, characterised in that the amplifiers are supplied with energy by the voltage source (ASG) which is dependent upon the test pulses.

8. A safety output circuit as claimed in at least one of the claims 1 to 7, characterised in that a disconnection delay is provided for at least one assembly (TG, ASG) which is dependent upon the test pulses.

## Revendications

1. Circuit de sortie de sécurité pour une installation de traitement de données comportant au moins une unité de commutation (C1, C2) délivrant des couples de signaux binaires et un dispositif (TG) délivrant la cadence, et dans lequel pour le transfert des couples de signaux binaires il est prévu deux circuits de commutation respectifs (K1, K2) exécutant une fonction de mémoire et dont les signaux de sortie sont préparés de manière à être délivrés directement par l'intermédiaire de deux circuits de commutation supplémentaires et sont envoyés en outre respectivement à des circuits comparateurs qui peuvent être interrogés par des impulsions d'essai fournies par le dispositif délivrant la cadence et renvoient les impulsions d'essais au dispositif délivrant la cadence uniquement lorsque le résultat de la comparaison est correct, de manière à continuer à maintenir la délivrance de la cadence, caractérisé par le fait qu'à la sortie de chaque circuit de commutation (K1, K2) exécutant une fonction de mémoire se trouve raccordé un circuit de porte (T1, T2) qui, en fonction de l'état de commutation du circuit de commutation associé, exécutant une fonction de mémorisation, envoie des signaux dynamiques du dispositif (TG) délivrant la cadence au circuit comparateur réalisé sous la forme d'un circuit de contrôle de coïncidence (AD).

2. Circuit de sortie de sécurité suivant la revendication 1, caractérisé par le fait qu'on utilise, comme circuit de porte, un circuit ET (T1, T2) comportant une sortie à collecteur ouvert, qui est reliée par l'intermédiaire d'une résistance de travail (R1, R2) à une source de tension (ASG) qui est commandée par les impulsions d'essai (TS) renvoyées au dispositif (TG) délivrant la cadence.

3. Circuit de sortie de sécurité suivant la revendication 1, caractérisé par le fait qu'on utilise comme circuit de porte (T1 ou T2), un étage d'attaque à trois états, dont l'entrée des données est reliée à une sortie du circuit de commutation associé (K1 ou K2) exécutant une fonction de mémoire, et dont l'entrée de libération est reliée au dispositif (TG) délivrant la cadence, tandis que sa sortie est reliée par l'intermédiaire d'une résistance de travail (R1 ou R2) à une source de tension (ASG) qui est commandée par les impulsions d'essai (TS) renvoyées au dispositif (TG) délivrant la cadence.

4. Circuit de sortie de sécurité suivant la revendication 1, caractérisé par le fait qu'on utilise comme circuit de porte (T1 ou T2), un seul étage d'attaque à trois étages, dont l'entrée de libération est reliée au circuit de commutation (K1 ou K2) exécutant une fonction de mémoire et dont l'entrée des données est reliée au dispositif (TG) délivrant la cadence, l'alimentation en courant de l'étage d'attaque à trois états étant réalisée au moyen d'une source de tension (ASG) qui est commandée au moyen des impulsions d'essai (TS) renvoyées au dispositif (TG) délivrant la cadence.

5. Circuit de sortie de sécurité suivant au moins l'une des revendications précédentes, caractérisé par le fait que la sortie de signaux binaires est réalisée par l'intermédiaire d'un amplificateur Fail-Safe (B) prévu uniquement dans l'un des deux canaux de chaque couple de canaux et commandé par le circuit de porte respectif (T2).

6. Circuit de sortie de sécurité suivant au moins l'une des revendications 1 à 4, caractérisé par le fait qu'à chacun des circuits de porte des deux canaux d'un couple de canaux se trouve raccordé un amplificateur qui commande un relais, les contacts des deux relais de chaque couple de canaux constituant un circuit à coïncidence, dont la sortie est reliée à l'installation de traitement de données, tandis que par ailleurs d'autres contacts des deux relais constituent la sortie du circuit.

7. Circuit de sortie de sécurité suivant au moins l'une des revendications précédentes, caractérisé par le fait que les amplificateurs sont alimentés en énergie par la source de tension (ASG) qui dépend des impulsions d'essais.

8. Circuit de sortie de sécurité suivant au moins l'une des revendications 1 à 7, caractérisé par le fait qu'un circuit de débranchement est prévu pour au moins un module (TG, ASG) qui dépend des impulsions d'essai.